Europäisches Patentamt

European Patent Office

Office européen des brevets

(11) Veröffentlichungsnummer: **0 519 358 A1**

# EUROPÄISCHE PATENTANMELDUNG

(21) Anmeldenummer: **92109993.3**

(22) Anmeldetag: **13.06.92**

(51) Int. Cl.5: **F16D 25/12**

(30) Priorität: **17.06.91 DE 4119891**

(43) Veröffentlichungstag der Anmeldung:
**23.12.92 Patentblatt 92/52**

(84) Benannte Vertragsstaaten:
**AT BE CH DE ES FR GB IT LI**

(71) Anmelder: **DEERE & COMPANY**
**1 John Deere Road**
**Moline, Illinois 61265(US)**

(72) Erfinder: **Rheinheimer, Günter**
**Hofstrasse 4**
**W-6751 Frankelbach(DE)**
Erfinder: **Schäfer, Helmut**
**Am Kraichbach 27**
**W-6834 Ketsch(DE)**

(74) Vertreter: **Feldmann, Bernhard et al**
**DEERE & COMPANY European Office Patent**
**Department Steubenstrasse 36-42**
**W-6800 Mannheim 1(DE)**

(54) **Kühlflüssigkeitssteuerung für eine Kupplung.**

(57) Die Kühlung einer naßlaufenden, hydraulisch betätigbaren Kupplung (12) mit Kühlflüssigkeit ist primär in der Rutschphase erforderlich, wenn die Reibbeläge durch den Schlupf erwärmt werden, d. h. wenn das übertragene Moment der Kupplung kleiner als das vom Antriebsmotor abgegebene Moment ist. Hierfür wird eine Kühlflüssigkeitssteuerung vorgeschlagen, durch die ein Kühlflüssigkeitssteuerventil (76) derart ansteuerbar ist, daß dieses beim Betrieb mit eingerückter oder ausgerückter Kupplung (12) den Kühlflüssigkeitsstrom zur Kupplung (12) unterbricht und während des Einkuppelvorgangs und gegebenenfalls für eine vorgebbare Zeitspanne (T1) im Anschluß an den Einkuppelvorgang den Kühlölstrom zur Kupplung (12) freigibt. Ferner gibt beim Auskuppelvorgang das Kühlflüssigkeitssteuerventil (76) den Kühlflüssigkeitsstrom zur Kupplung (12) nur dann frei und hält ihn bis zum Zeitpunkt des Trennens der Kupplungslamellen aufrecht, wenn die Rutschphase beim Auskuppelvorgang länger als eine vorgebbare zweite Zeitspanne (T2) anhält.

FIG. 3

Die Erfindung betrifft eine Kühlflüssigkeitssteuerung für eine durch Betätigungsmittel hydraulisch ein- und ausrückbare Kupplung, durch die ein Kühlflüssigkeitssteuerventil derart ansteuerbar ist, daß dieses beim Betrieb mit eingerückter oder ausgerückter Kupplung den Kühlflüssigkeitsstrom zur Kupplung unterbricht und während des Einkuppelvorgangs und gegebenenfalls für eine vorgebbare erste Zeitspanne im Anschluß an den Einkuppelvorgang den Kühlölstrom zur Kupplung freigibt.

Nasse Fahrzeug- oder Zapfwellenkupplungen, wie sie beispielsweise bei landwirtschaftlichen oder industriellen Fahrzeugen Verwendung finden, enthalten meist einen hydraulisch beaufschlagten Kolben, der ein Paket aus Kupplungslamellen oder -scheiben zusammenpreßt. Das Einrücken der Kupplung erfolgt durch Reibschluß, wodurch Hitze entsteht. Um einen übermäßigen Verschleiß der Kupplung zu vermeiden, wird sie durch Kühlflüssigkeit, beispielsweise Kühlöl, gekühlt (Wärmeabfuhr).

Die Kühlung der Kupplung mit Kühlflüssigkeit ist primär in der Rutschphase erforderlich, wenn die Reibbeläge durch den Schlupf erwärmt werden, d. h. wenn das übertragene Moment der Kupplung kleiner als das vom Antriebsmotor abgegebene Moment ist.

Durch die Auslegung der Kupplung bestimmt, kann beispielsweise das maximale Antriebsmoment ca. 65 % des Kupplungsnennmoments betragen. Da das von der Kupplung übertragene Moment in erster Näherung proportional zum hydraulischen Kolbendruck ist, tritt also ein Rutschen der Kupplung ein, wenn der Kolbendruck unterhalb von ca. 65 % des Hydrauliksystemdruckes liegt.

Durch die EP-B1-0 143 314 ist eine Kühlflüssigkeitssteuerung für eine Kupplung der eingangs genannten Art bekannt geworden, bei der das Kühlflüssigkeitssteuerventil in Abhängigkeit von der Betätigung der Kupplung derart einstellbar ist, daß eine Kühlung der Kupplungslamellen nur während der Betätigung der Kupplung beim Ein- und Auskuppeln, also bei teilweise in Eingriff stehender Kupplung, erfolgt. Die Steuerung ist derart ausgelegt, daß beim Einkuppeln die Kühlung noch nach dem Beenden des Einrückvorgangs für eine vorgebbare Zeitspanne anhält, um die erwärmten Kupplungslamellen ausreichend abzukühlen. Beim Auskuppeln wird die Kühlung mit dem Einsetzen des Auskuppelvorgangs eingeschaltet und mit Beendigung des Auskuppelvorgangs wieder unterbrochen.

Die mit der Erfindung zu lösende Aufgabe wird darin gesehen, eine derartige Kühlflüssigkeitssteuerung weiter zu verbessern, wobei der Aufbau einfach und kostengünstig herstellbar und größtmögliche Betriebssicherheit ermöglichen soll.

Die Aufgabe wird erfindungsgemäß dadurch gelöst, daß beim Auskuppelvorgang das Kühlflüssigkeitssteuerventil den Kühlflüssigkeitsstrom zur Kupplung nur dann freigibt und bis zum Zeitpunkt des Trennens der Kupplungslamellen aufrechterhält, wenn die Rutschphase beim Auskuppelvorgang länger als eine vorgebbare zweite Zeitspanne anhält.

Dies hat zur Folge, daß beim schnellen Auskuppeln keine Kühlung der Kupplung erfolgt, sondern nur bei langsamen Auskuppelvorgängen, bei denen die Kupplungslamellen für relativ lange Zeitspannen Energie umsetzen und sich erwärmen.

Der oben genannte Zeitpunkt des Ausrückens der Kupplung, d. h. des Trennens der Kupplungslamellen, ist gewöhnlich dadurch definiert, daß die Kraft der Rückstellfedern im Gleichgewicht ist mit den Kräften des die Kupplung betätigenden Hydraulikdrucks (Auskuppeldruck) und der Reibung der Kupplungskolbendichtungen.

Der Zeitpunkt kann jedoch auch durch etwas unter oder etwas über dem Auskuppeldruck liegende Hydraulikdrücke definiert werden, um einerseits das Anfahren zu erleichtern (frühzeitige Kühlung) oder andererseits dem Fahrer einen genau definierten Anfahrpunkt bereitzustellen (späte Kühlung). Da im Bereich des Auskuppeldruckes sehr wenig Reibenergie in der Kupplung umgesetzt wird, schadet es nicht, wenn Kühlöl beim Einkuppeln erst geringfügig oberhalb des Auskuppeldruckes zugeschaltet oder beim Auskuppeln bereits geringfügig oberhalb des Auskuppeldruckes abgeschaltet wird.

Durch die erfindungsgemäße Lösung können die Kupplungseigenschaften verbessert werden, indem eine Kühlung in allen kritischen Betriebszuständen (längere Rutschphasen) erfolgt, wobei jedoch nur die unbedingt notwendige Kühlflüssigkeitsmenge der Kupplung zugeführt wird. Die Kapazität des Kühlflüssigkeitsversorgungssystemskann somit vergleichsweise klein gehalten werden.

Der Erfindung liegt die Überlegung zugrunde, daß beim Kuppeln durch nicht vollständig aus den Lamellen ausgeschleuderte Kühlflüssigkeit störende Schleppmomente auftreten, die den Schaltvorgang eines nachgeordneten Schaltgetriebes unnötig erschweren.

Beim Auskuppeln sind schnelle Kuppelvorgänge, durch die ein Gangwechsel eingeleitet wird, vorherrschend. Hierbei ist der Energieanfall derart gering, daß eine Kühlmittelzufuhr nicht notwendig wird. Erfindungsgemäß wird daher bei schnellen Auskuppelvorgängen eine Kühlung bewußt verhindert, so daß die geöffnete (ausgerückte) Kupplung bei Beendigung des Ausrückvorgangs praktisch immer frei von Kühlflüssigkeit ist. Dadurch wird der nachfolgende Schaltvorgang an den Synchronisierelementen des Schaltgetriebes nicht durch Schleppmomente der Kupplung beaufschlagt, was zu erschwertem Schalten und zu erhöhtem Verschleiß an den Synchronringen führen kann. Wird dagegen langsam ausgekuppelt, so erfolgt eine sichere Versorgung der Kupplung mit Kühlflüssigkeit in der Schlupfphase, um die Reibenergie abzuführen.

Als Steuergrößen für die Kühlölsteuerung können das Kupplungsrutschmoment oder hierzu proportionale Größen, wie Kupplungskolbendruck oder Betätigungsweg an Kupplungskolben, Kupplungsventil, Kupplungspedal oder zwischengeschalteten Betätigungsgliedern verwendet werden.

Gemäß einer Ausgestaltung der Erfindung beginnt die vorgebbare zweite Zeitspanne mit dem Unterschreiten eines vorgebbaren oberen Schwellenwertes des Kupplungskolbendruckes. An Stelle dieses Schwellenwertes kann für die Auslösung der zweiten Zeitspanne auch eine Größe herangezogen werden, die den Beginn des Auskuppelvorgangs markiert. Geht man davon aus, daß die Kupplung bei 65 % des Kupplungssystemdruckes nicht mehr rutscht, d. h. keine Energie mehr umsetzt, liegt der obere Schwellenwert vorzugsweise zwischen 80 und 90 % des Kupplungssystemdruckes. Dieser obere Schwellenwert wird zweckmäßigerweise auch zur Auslösung der ersten Zeitspanne herangezogen.

Der Zeitpunkt des Trennens der Kupplungslamellen läßt sich durch einen unteren Schwellenwert des Kupplungskolbendruckes definieren, der vorzugsweise zwischen 10 und 20 % des Kupplungssystemdruckes liegt.

Vorzugsweise ist vorgesehen, daß die erste Zeitspanne 5 bis 45 Sekunden, zweckmäßigerweise etwa 15 Sekunden, und die zweite Zeitspanne 0,5 bis 3,0 Sekunden, zweckmäßigerweise etwa 1,5 Sekunden beträgt.

Für eine einfache, druckproportionale und damit direkte, unmittelbare Steuerung in Abhängigkeit vom durch die Kupplung übertragenen Drehmoment ist es vorteilhaft, ein Kühlflüssigkeitssteuerventil und ein Pilotventil in der durch den Patentanspruch 5 bezeichneten Weise anzuordnen. Dies hat zur Folge, daß innerhalb vorbestimmter Grenzen oder Schwellenwerte des auf den Kupplungskolben wirkenden Hydraulikdruckes (z. B. im Bereich von 2 bis 10 bar), zwischen denen die Kupplung weder vollständig ausgerückt noch vollständig eingerückt ist, grundsätzlich Kühlflüssigkeit zu den Reibbelägen der Kupplung fließen kann.

Ein elektromagnetisches Ventil, ein Drucksensor und eine Steuereinrichtung lassen sich gemäß vorteilhafter Ausgestaltungen der Erfindung so anordnen, daß die druckabhängige Schaltstellung des hydromechanischen Flüssigkeitssteuerventils und des hydromechanischen Pilotventils überspielt werden kann, so daß auch bei einem Druck zwischen den genannten vorbestimmten Schwellenwerten die Kühlflüssigkeitsversorgung der Kupplung unterbrochen wird oder bei einem Druck über dem oberen Schwellenwert eingeschaltet bleibt. Dies ermöglicht eine Nachkühlung der Kupplungslamellen, wenn sie bereits vollständig eingerückt sind. Ferner wird eine sichere Versorgung der Kupplung mit Kühlflüssigkeit in den Schlupfphasen auch dann ermöglicht, wenn die elektrischen oder elektronischen Elemente ausgefallen sind, zum Beispiel bei Betrieb des Fahrzeuges ohne Batterie.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

| Fig. 1 | die schematische Darstellung eines Fahrzeugantriebes, |
| Fig. 2 | den schematischen Schnitt durch eine naßlaufende Fahrkupplung, |
| Fig. 3 bis 8 | einen schematisch dargestellten erfindungsgemäßen Kühlflüssigkeitssteuerkreis in verschiedenen Schaltstellungen und |
| Fig. 9 | Zeitdiagramme des Kupplungskolbendruckes und des Kühlflüssigkeitsdurchflusses während Kupplungsbetätigungen. |

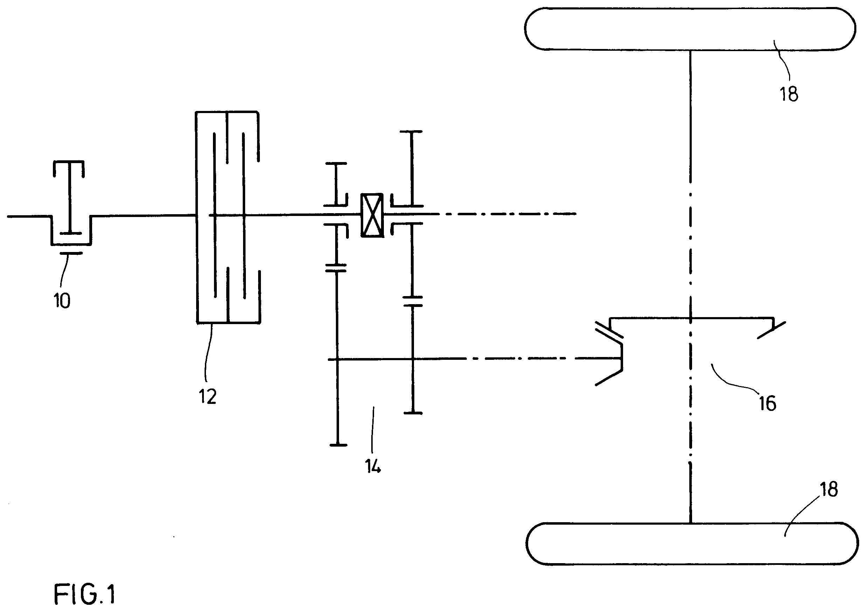

Aus Fig. 1 geht der Antrieb eines Fahrzeuges, der beispielsweise für einen Ackerschlepper bestimmt ist, in vereinfachter Darstellung hervor. Die Antriebskraft wird durch eine Verbrennungskraftmaschine 10 erzeugt, über eine naßlaufende Kupplung 12 an ein synchronisiertes Schaltgetriebe 14 abgegeben und über ein Differentialgetriebe 16 auf die Antriebsräder 18 übertragen.

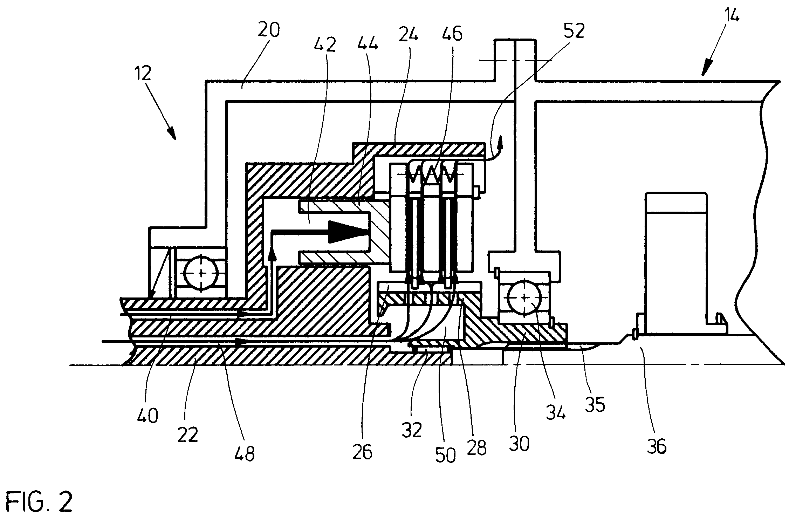

Die Fahrkupplung ist in einem Halbschnitt in Fig. 2 dargestellt. In einem Kupplungsgehäuse 20 ist die Eingangswelle 22 der Kupplung 12 gelagert. Die Eingangswelle 22 trägt eine Trommel 24, die drehfest eine Vielzahl von Kupplungsaußenlamellen trägt. Zwischen diesen Lamellen sind Kupplungsinnenlamellen eingeschichtet, die drehfest mit einer Verzahnung 26 der trommelförmigen Nabe 28 der Ausgangswelle 30 der Kupplung 12 in Verbindung stehen. Zwischen der Eingangswelle 22 und der Ausgangswelle 30 ist ein Nadellager 32 angeordnet. Die Ausgangswelle 30 ist über ein Lager 34 in dem Gehäuse 36 eines synchronisierten Schaltgetriebes 14, welches an das Kupplungsgehäuse 20 angeflanscht ist, gelagert. Sie ist über eine Keilverzahnung 35 mit der Getriebeeingangswelle 36 verbunden.

In der Eingangswelle 22 der Kupplung 12 verläuft eine Hydraulikleitung 40, durch die Hydraulikflüssigkeit in einen Zylinderraum 42 der Kupplungstrommel 24 fließen kann, um einen Kupplungskolben 44 zu beaufschlagen. Der Kupplungskolben 44 wirkt gegen die Kraft von Rückstellfedern 46, um die Kupplungslamellen zusammenzupressen und eine Kraftübertragung zwischen Eingangswelle 22 und Ausgangswelle 30 herbeizuführen.

In der Eingangswelle 22 verläuft ferner eine Kühlflüssigkeitsleitung 48, durch die Kühlflüssigkeit, beispielsweise Kühlöl, in den Innenraum 50 der Habe 28 zuführbar ist. Von hier aus tritt das Kühlöl unter Fliehkraftwirkung durch radiale Bohrungen in der trommelförmigen Nabe 28 radial nach außen zu den Reibbelägen der Kupplungslamellen. In den Reibbelägen befinden sich im wesentlichen radial verlaufende Nuten, die dem Durchfluß des Kühlöls dienen. Durch das Kühlöl wird die in der Kupplung 12 entstehende Wärme abgeführt, wie es der Pfeil 52 andeutet. Das erwärmte Kühlöl kann durch Öffnungen im Außenmantel der Kupplungstrommel 24 abgeschleudert und einem nicht gezeigten Kühler zugeführt werden.

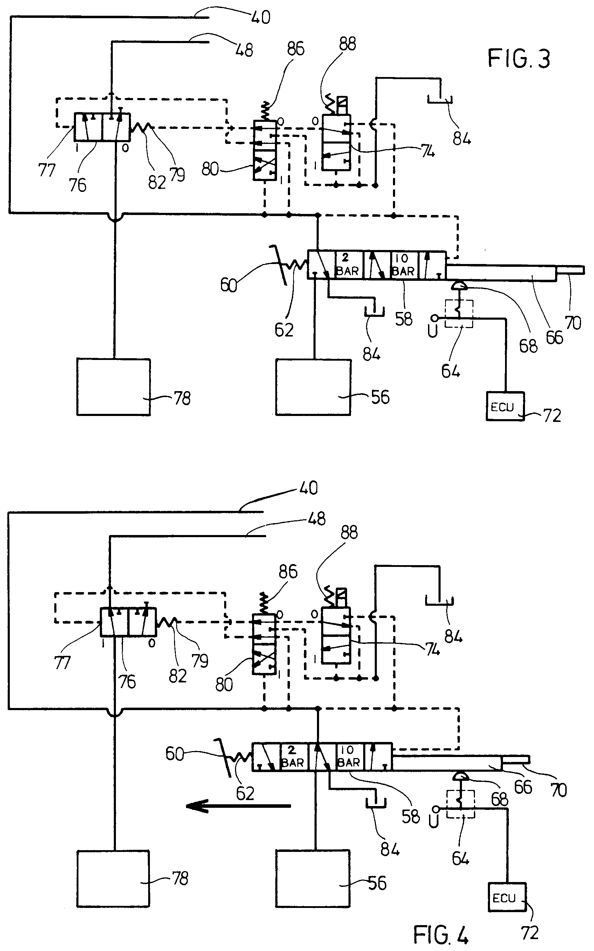

Die Einstellung der Flüssigkeitsströme in der Hydraulikleitung 40 und in der Kühlflüssigkeitsleitung 48 wird durch eine Steuerung vorgenommen, wie sie aus den Figuren 3 bis 8 hervorgeht.

Zur Erzeugung des Hydrauliksystemdruckes dient eine Druckquelle 56, üblicherweise eine Zahnradpumpe mit einem nachgeschalteten Druckregelventil, das den Systemdruck konstant hält. Die Druckquelle 56 steht über ein Kupplungsventil 58 mit der Hydraulikleitung 40 in Verbindung. Über das Kupplungsventil 58 erfolgt das Öffnen (Auskuppeln) und Schließen (Einkuppeln) der Kupplung 12. Es kann über ein Kupplungspedal 60 gegen die Kraft einer Feder 62 vom Fahrer bedient werden. Das Kupplungsventil 58 erlaubt es dem Fahrer, den Druck am Kupplungskolben 44 von Null bis zum Nenndruck (zum Beispiel 12 bar) stufenlos zu variieren, um beispielsweise einen Anfahrvorgang zu gestalten.

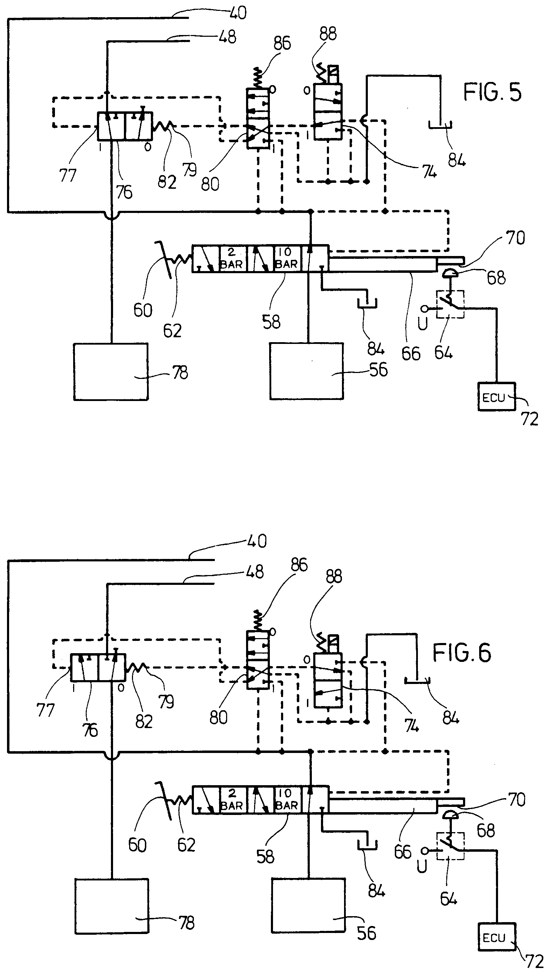

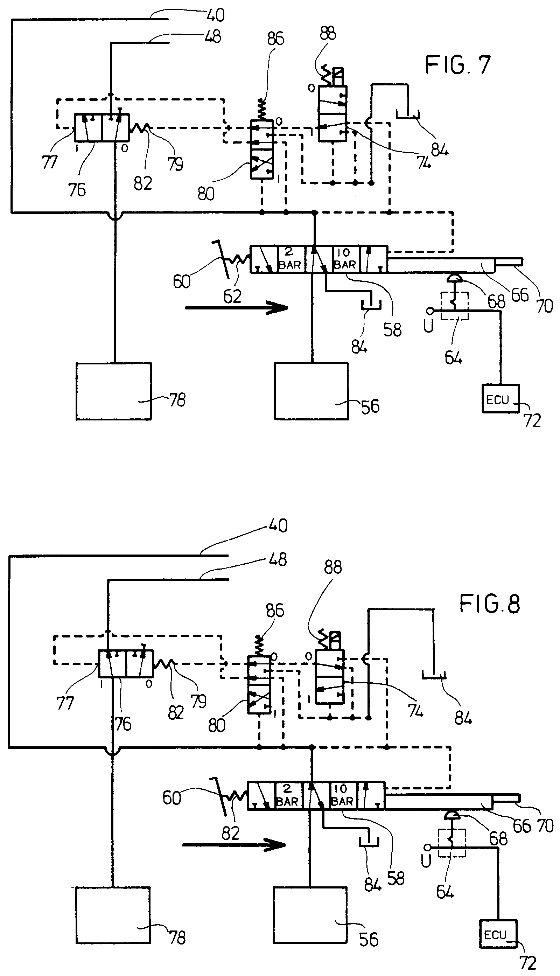

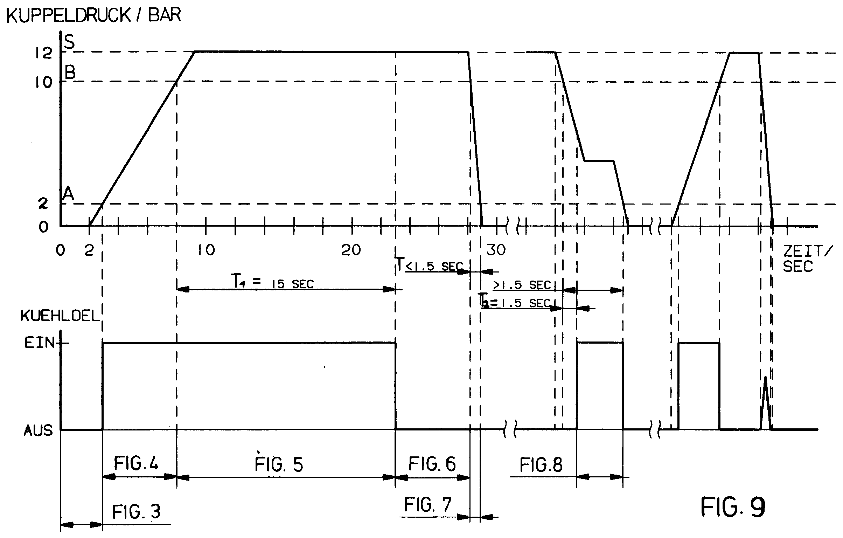

Mit dem Kupplungsventil 58 steht ein druckanaloger Wegschalter 64 in Verbindung, der bei Über- oder Unterschreiten einer Ventilstellung, die einem bestimmten Druck entspricht (zum Beispiel 10 bar), bei dem die Kupplung eingerückt ist, einen Kontakt öffnet oder schließt. Hierzu steht mit dem Kupplungsventil 58 eine Nockenstange 66 in Verbindung, die mit einem Tastorgan 68 des Wegschalters 64 zusammenwirkt. Nimmt das Kupplungsventil 58 eine Lage ein, bei der der bestimmte Druck (zum Beispiel 10 bar) überschritten ist, so befindet sich das Tastorgan 68 im Bereich einer zurückspringenden Kante 70 der Nockenstange 66 und öffnet einen Kontakt des Wegschalters 64, wie dies in Fig. 5 oder 6 gezeigt ist. Nimmt hingegen das Kupplungsventil 58 eine Lage ein, bei der der bestimmte Druck (zum Beispiel 10 bar) nicht erreicht wird, so bleibt der Kontakt des Wegschalters 64 geschlossen, wie dies in den Figuren 3, 4, 7 und 8 gezeigt ist.

An Stelle des Wegschalters läßt sich beispielsweise auch ein Druckschalter direkt in die Hydraulikleitung 40 einsetzen, der bei Über- oder Unterschreiten eines Druckes eine Schaltfunktion ausführt.

Das beim Öffnen oder Schließen des Wegschalters 64 ausgelöste Schaltsignal wird einer elektronischen Steuereinheit 72 zugeführt. Diese Steuereinheit 72 gibt dann, wenn der Wegschalter 64 bei einer Kupplungsausrückbewegung des Kupplungsventils 58 (bei etwa 10 bar) den Kontakt schließt, für eine zweite vorgebbare Zeitspanne T2 (zum Beispiel 1,5 Sekunden) eine Steuerspannung an das elektromagnetische Ventil 74, auf das noch näher eingegangen wird, ab. Wird hingegen der Kontakt des Wegschalters 64 bei einer Kupplungseinrückbewegung des Kupplungsventils 58 (bei etwa 10 bar) geöffnet, so gibt die elektronische Steuereinheit 72 für eine erste vorgebbare Zeitspanne T1 (zum Beispiel 15 Sekunden) eine Steuerspannung an das elektromagnetische Ventil 74 ab.

Ein hydromechanisches 3/2 Ventil 76 dient als Kühlflüssigkeitssteuerventil, durch das eine Verbindung für den Kühlflüssigkeitsstrom von einer Kühlflüssigkeitsquelle 78 zu der Kühlflüssigkeitsleitung 48 geöffnet (Stellung I) oder geschlossen (Stellung 0) werden kann. An den beiden Stirnseiten des Ventils 76 befindet sich je eine Pilotkammer 77, 79, die durch ein Pilotventil 80 mit Steuerdruck beaufschlagt werden kann. Eine Stirnseite des Ventils 76 ist durch eine Druckfeder 82 belastet, die in Schließrichtung des Ventils 76 und gegen den Druck in der ersten (linken) Pilotkammer 77 wirkt. Die Kraft der Druckfeder 82 entspricht einem Druck von 2 bar und wird durch den Druck in der zweiten (rechten) Pilotkammer 79 unterstützt.

Das Pilotventil 80 ist ein hydromechanisches 5/2 Ventil, dessen beide Ausgänge mit jeweils einer der Pilotkammern 77, 79 des Kühlflüssigkeitssteuerventils 76 in Verbindung stehen. Das Pilotventil 80 verbindet seine beiden Ausgänge mit dem Kupplungsdruck in der Hydraulikleitung 40, mit einem Sumpf 84 oder mit dem Ausgang des elektromagnetischen Ventils 74. Eine Stirnseite des Pilotventils 80 ist durch eine Feder 86 mit einer Federkraft, die einem Druck von 10 bar entspricht, belastet. Die andere Stirnseite ist mit dem Kupplungskolbendruck der Hydraulikleitung 40 beaufschlagt.

Das elektromagnetische Ventil 74, das durch die elektronische Steuereinheit 72 angesteuert wird, ist ein 3/2 Ventil und verbindet seinen Ausgang in stromloser Stellung O mit dem Sumpf 84 oder in erregtem Zustand (Stellung I) mit dem Kupplungskolbendruck in der Hydraulikleitung 40. Eine Stirnseite des elektromagnetischen Ventils 74 ist durch eine Feder 88 belastet, während die andere Stirnseite mit dem Sumpf 84 verbunden ist.

Im folgenden wird die Wirkungsweise des Steuerkreises anhand der Fig. 3 bis 8 beschrieben: Im Ausgangszustand (Fig. 3) ist die Kupplung 12 geöffnet, d. h. das Kupplungspedal 60 ist durchgetreten, der Arbeitsdruck ist durch das Kupplungsventil 58 abgesperrt und die an der Kühlflüssigkeitssteuerung beteiligten Ventile 76 und 80 befinden sich in ihren durch die jeweiligen Federn 82 und 86 geschalteten Stellungen 0. Das elektromagnetische Ventil 74 ist spannungsfrei und wird durch die Feder 88 ebenfalls in seiner Stellung 0 gehalten.

Beim Anfahrvorgang wird zum Einrücken der Kupplung 12 der Druck zum Kupplungskolben 44 durch langsames Freigeben des Kupplungsventils 58 stufenlos von 0 bar auf den Systemdruck S (hier 12 bar) erhöht. Bis zum Erreichen eines unteren Schwellenwertes A für den Druck am Kupplungskolben 44 (hier 2 bar) bleiben alle Ventile in ihrer Ausgangsstellung 0, da der Druck in der Hydraulikleitung 40 die Kraft der Federn 82 und 86 nicht überwindet. Der Kühlflüssigkeitsstrom bleibt abgesperrt. Der untere Schwellenwert A entspricht in etwa dem Druck, der notwendig ist, um das Lamellenpaket der Kupplung 12 entgegen der Federkraft der Rückstellfedern 46 des Kupplungskolbens 44 und der Reibung der Kolbendichtungen zu schließen und die Rutschphase der Kupplung 12 einzuleiten.

Wird der Druck in der Hydraulikleitung 40 infolge einer Bewegung des Kupplungsventils 58 nach links (gemäß Fig. 1 bis 8) größer, so treten die Kupplungslamellen in Reibverbindung und erzeugen Wärme. Die erste Pilotkammer 77 des Kühlflüssigkeitssteuerventils 76 steht über das Pilotventil 80 mit dem Druck in der Hydraulikleitung 40 in Verbindung. Dieser Druck überwindet die Kraft der Feder 82, und das Ventil 76 schaltet von Stellung 0 auf Stellung I (Fig. 4). Das Ventil 76 ist jetzt geöffnet, und die Kühlflüssigkeit kann von der Kühlflüssigkeitsquelle 78 zum Lamellenpaket der Kupplung 12 fließen, um die entstehende Wärme abzuführen.

Das Pilotventil 80 verbleibt in Stellung 0, da die Druckkraft am Steueranschluß erst bei einem Druck größer als 10 bar die Kraft der Feder 86 überwindet. Das elektromagnetische Ventil 74 ist noch spannungsfrei und verbleibt in Stellung 0. Solange der Kupplungsdruck in der Hydraulikleitung 40 zwischen dem unteren Schwellenwert A (hier 2 bar) und einem oberen Schwellenwert B (hier 10 bar) verharrt, bleibt der Kühlflüssigkeitsstrom aufrechterhalten.

Wird das Kupplungsventil 58 weiter nach links verstellt, und erreicht der Druck in der Hydraulikleitung 40 den oberen Schwellenwert B von 10 bar (Fig. 5), bei dem die Kupplungslamellen vollständig zusammengedrückt sind und die Rutschphase beendet ist, so überwindet die an das Pilotventil 80 angelegte Kraft des Steuerdruckes die Kraft der Feder 86 und schaltet das Pilotventil 80 in seine Stellung I. Damit würde sich der Steuerdruck der ersten Pilotkammer 77, der das Ventil 76 in seiner Stellung 0 hält, in den Sumpf 84 abbauen, und das Ventil 76 würde durch die Kraft der Feder 82 wieder in Stellung 0 übergehen und den Kühlflüssigkeitsstrom absperren.

Jedoch wird gleichzeitig mit dem Umschalten des Pilotventils 80 von Stellung 0 auf Stellung I bei Erreichen des oberen Schwellenwertes B das Tastorgan 68 des Wegschalters 64 von der Kante 70 freigegeben, so daß der Wegschalter 64 öffnet und einen Impuls an die elektronische Steuereinheit 72 abgibt, die ihrerseits das elektromagnetische Ventil 74 für eine Zeitdauer von 15 Sekunden, die mit dem Überschreiten des oberen Grenzwertes B beginnt, aktiviert. Das Ventil 74 schaltet in Stellung I um und gibt den Druck der Hydraulikleitung 40 zum Pilotventil 80 frei, das seinerseits die erste Pilotkammer 77 des Kühlflüssigkeitssteuerventils 76 unter Druck setzt und damit verhindert, daß sich dieses Ventil 76 in seine geschlossene Stellung 0 bewegt. Der Kühlflüssigkeitsstrom wird somit so lange aufrechterhalten, wie das elektromagnetische Ventil 74 aktiviert ist. Da die elektronische Steuereinheit 72 für eine bestimmte erste Zeitspanne T1 (hier 15 Sekunden) das elektromagnetische Ventil 74 ansteuert, kann während dieser Zeitspanne T1 die Kupplung 12 durch Nachkühlen auf ihre Ausgangstemperatur abgekühlt werden.

Ist die erste Zeitspanne T1 von 15 Sekunden verstrichen, so schaltet die elektronische Steuereinheit 72 das elektromagnetische Ventil 74 ab, welches durch die Kraft der Feder 88 in seine Ruhestellung 0 zurückkehrt (Fig. 6). Nun wird der Steuerdruck für die erste Pilotkammer 77 des Kühlflüssigkeitssteuerventils 76 durch das Pilotventil 80 und das elektromagnetische Ventil 74 in den Sumpf 84 abgebaut. Das Ventil 76 schaltet in seine Stellung 0 zurück und sperrt den Kühlflüssigkeitsstrom zur Kupplung 12 ab.

Beim Ausrücken der Kupplung 12, um zum Beispiel ein synchronisiertes, formschlüssiges Schaltelement des Schaltgetriebes 36 zu betätigen und einen Gangwechsel vorzunehmen, ist die Wärmeentwicklung in der Kupplung 12 so gering, daß ein Kühlflüssigkeitsstrom nicht erforderlich ist. Andererseits ist der Kühlflüssigkeitsstrom in der Kupplung 12 während der Betätigung des Schaltgetriebes 36 auch unerwünscht, denn zwischen den gelüfteten Lamellen befindliche Kühlflüssigkeit erhöht das Schleppmoment der Kupplung 12 und belastet die Synchronringe des Schaltgetriebes 36, wodurch dessen Lebensdauer vermindert und der Schaltkomfort (Schaltkraft und -zeit) beeinträchtigt werden.

Es ist somit wünschenswert, daß während des gesamten Auskuppelvorgangs, also nicht nur im ausgekuppelten Zustand, keine Kühlflüssigkeit zur Kupplung 12 gelangt, weil erst nach einer entsprechenden Zeitverzögerung die in der Kupplung 12 vorhandene Kühlflüssigkeit wieder ausgeschleudert und das Schleppmoment wieder auf seinen minimalen Wert abgefallen ist. Andererseits soll jedoch dann eine Flüssigkeitskühlung erfolgen, wenn der Auskuppelvorgang nicht rasch erfolgt, sondern eine bestimmte zweite Zeitspanne T2 überschreitet.

Zu diesem Zweck ist die elektronische Steuereinheit 72 derart beschaffen, daß mit dem Schließen des Kontakts des Wegschalters 64 für eine vorgebbare zweite Zeitspanne T2 (hier 1,5 Sekunden) das elektromagnetische Ventil 74 aktiviert wird. Der Kontakt des Wegschalters 64 wird geschlossen, sobald bei einer Ausrückbewegung des Kupplungsventils 58 die obere Schwelle des Druckes in der Hydraulikleitung 40 unterschritten wird (Fig. 7). Das elektromagnetische Ventil 74 geht in seine Stellung I über. Gleichzeitig wird das Pilotventil 80 in seine Stellung 0 geschaltet, da der Druck in der Hydraulikleitung 40 nicht mehr ausreicht um die Kraft der Feder 86 zu überwinden. Dadurch liegt an beiden Pilotkammern 77, 79 des Kühlflüssigkeitssteuerventils 76 der Druck der Hydraulikleitung 40 an. Da die Steuerquerschnitte des Ventils 76 gleich groß und die Druckkräfte ausgeglichen sind, drückt die Feder 82 das Ventil 76 in seine Stellung 0. Der Kühlflüssigkeitsstrom bleibt abgeschaltet.

Bei einem raschen Auskuppelvorgang, bei dem der Druck in der Hydraulikleitung 40 innerhalb der zweiten Zeitspanne T2 (von 1,5 Sekunden) von 10 bar auf 2 bar abgebaut wird, bleibt die Kupplung 12 frei von Kühlflüssigkeit. Unterhalb von 2 bar ist der Kühlflüssigkeitsstrom in jedem Fall durch die Feder 82 des Kühlflüssigkeitssteuerventils 76 abgeschaltet. Die Synchronisierschaltung des Getriebes 36 kann jetzt unter optimalen Bedingungen erfolgen.

Für den Fall, daß der durch die Bedienungsperson veranlaßte Auskuppelvorgang länger andauert und das Kupplungsventil 58 länger als 1,5 Sekunden in einer Stellung verharrt, bei der der Druck in der Hydraulikleitung 40 zwischen 10 und 2 bar bleibt (schleifende Kupplung), wird die Aktivierung des elektromagnetischen Ventils 74 durch die elektronische Steuereinheit 72 unterbrochen (Fig. 8). Das Ventil 74 schaltet in seine Stellung 0 zurück. Das Pilotventil 80 befindet sich in Stellung 0, da der Druck in der Hydraulikleitung 40 kleiner als 10 bar ist. Die federseitige Pilotkammer 79 des Kühlflüssigkeitssteuerventils 76 wird mit dem Zurückschalten des Ventils 74 über das Pilotventil 80 und das Ventil 74 mit dem Sumpf verbunden, während die gegenüberliegende erste Pilotkammer des Ventils 76 mit dem Druck in der Hydraulikleitung beaufschlagt bleibt. Damit wird das Ventil 76 in seine Stellung I gedrückt und der Kühlflüssigkeitsstrom eingeschaltet.

Sind die elektrischen oder elektronischen Bauteile ganz oder teilweise ausgefallen oder wird das Fahrzeug ohne elektrische Versorgung (ohne Batterie) betrieben, so ist durch die hydromechanischen Ventile 76 und 80 sichergestellt, daß die Kupplung zwischen dem unteren Schwellenwert A (2 bar) und dem oberen Schwellenwert B (10 bar), also in der Rutschphase, in jedem Fall gekühlt wird. Eine Überhitzung wird also sicher verhindert.

Ebenso ist im ausgekuppelten Zustand sichergestellt, daß der Kupplung keine Kühlflüssigkeit zugeführt wird, also eine leichte Schaltbarkeit des Getriebes gewährleistet ist.

Aus Fig. 9 geht ein Zeitdiagramm für den Kupplungsdruck in der Hydraulikleitung 40 und für den Kühlöldurchtritt durch das Steuerventil 76 bei verschiedenen Ein- und Auskuppelvorgängen hervor. In einem ersten Abschnitt wird das Verhalten bei einem üblichen Einkuppelvorgang und einem raschen Auskuppelvorgang gezeigt. In einem zweiten Abschnitt ist das Verhalten für einen langsamen Auskuppelvorgang gezeigt, und in einem dritten Abschnitt ist ein Einkuppel- und ein Auskuppelvorgang gezeigt, bei dem die elektrischen Bauteile ausgefallen sind. In Fig. 9 wird auf Schaltstellungen gemäß den Fig. 3 bis 8 Bezug genommen.

Auch wenn die Erfindung lediglich anhand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

**Patentansprüche**

1. Kühlflüssigkeitssteuerung für eine durch Betätigungsmittel hydraulisch ein- und ausrückbare Kupplung (12), durch die ein Kühlflüssigkeitssteuerventil (76) derart ansteuerbar ist, daß dieses beim Betrieb mit eingerückter oder ausgerückter Kupplung (12) den Kühlflüssigkeitsstrom zur Kupplung (12) unterbricht und während des Einkuppelvorgangs und gegebenenfalls für eine vorgebbare erste Zeitspanne (T1) im Anschluß an den Einkuppelvorgang den Kühlölstrom zur Kupplung (12) freigibt, dadurch gekennzeichnet, daß beim Auskuppelvorgang das Kühlflüssigkeitssteuerventil (76) den Kühlflüssigkeitsstrom zur Kupplung (12) nur dann freigibt und bis zum Zeitpunkt des Trennens der Kupplungslamellen aufrechterhält, wenn die Rutschphase beim Auskuppelvorgang länger als eine vorgebbare zweite Zeitspanne (T2) anhält.

2. Steuerung nach Anspruch 1, dadurch gekennzeichnet, daß die vorgebbare zweite Zeitspanne (T2) mit dem Unterschreiten eines vorgebbaren oberen Schwellenwertes (B) des Kupplungskolbendruckes, oder einem mit diesem in eindeutigen Zusammenhang stehenden Meßwert, der oberhalb des Einkuppeldruckes liegt, beginnt.

3. Steuerung nach Anspruch 1 oder 2, dadurch gekennzeichnet, daß das Ende der Rutschphase des Auskuppelvorgangs durch einen vorgebbaren unteren Schwellenwert (A) des Kupplungskolbendruckes, oder einem mit diesem in eindeutigen Zusammenhang stehenden Meßwert definiert ist, der im Bereich des Auskuppeldruckes liegt.

4. Steuerung nach einem der Ansprüche 1 bis 3, dadurch gekennzeichnet, daß die erste Zeitspanne (T1) 5 bis 45 Sekunden, vorzugsweise etwa 15 Sekunden und die zweite Zeitspanne (T2) 0,5 bis 3,0 Sekunden, vorzugsweise etwa 1,5 Sekunden beträgt.

5. Steuerung nach einem der Ansprüche 1 bis 4, dadurch gekennzeichnet, daß das Kühlflüssigkeitssteuerventil ein pilot- und federgesteuertes hydromechanisches Ventil (76) ist, das gegen die Kraft einer Feder (82) aus einer Ruhestellung (0) in eine zweite Stellung (I) übergeht, wenn der Druck in einer ersten Pilotkammer (77) des Ventils (76) einen vorgebbaren unteren Schwellenwert (A) des Kupplungskolbendruckes übersteigt, daß ein gegen den Kupplungskolbendruck federvorgespanntes hydromechanisches Pilotventil (80) vorgesehen ist, das gegen die Kraft einer Feder (86) aus einer Ruhestellung (0) in eine zweite Stellung (I) übergeht, wenn der Kupplungskolbendruck einen vorgebbaren oberen Schwellenwert (B) übersteigt, und daß die erste Pilotkammer (77) des Kühlflüssigkeitssteuerventils (76) in der Ruhestellung (0) des Pilotventils (80) mit dem Kupplungskolbendruck beaufschlagt ist.

6. Steuerung nach Anspruch 5, dadurch gekennzeichnet, daß die erste Pilotkammer (77) des Kühlflüssigkeitssteuerventils (76) durch das Pilotventil (80) mit einem Sammelbehälter (84) verbindbar ist, sofern sich das Pilotventil (80) in seiner zweiten Stellung (I) befindet.

7. Steuerung nach Anspruch 5 oder 6, dadurch gekennzeichnet, daß ein elektromagnetisches Ventil (74) vorgesehen ist, welches in Ruhestellung (0) seinen hydraulischen Ausgang mit einem Sammelbehälterdruck und in angezogener Stellung (I) mit dem Kupplungskolbendruck beaufschlagt, und daß das Pilotventil (80) in seiner Ruhestellung (0) den Ausgang des elektromagnetischen Ventils (74) mit einer zweiten gegen die erste Pilotkammer (77) wirkenden Pilotkammer (79) des Kühlflüssigkeitssteuerventils (76) verbindet und in seiner zweiten Stellung (I) den Ausgang des elektromagnetischen Ventils (74) mit der ersten Pilotkammer (77) des Kühlflüssigkeitssteuerventils (76) verbindet.

8. Steuerung nach Anspruch 7, dadurch gekennzeichnet, daß eine Steuereinrichtung (72), insbesondere eine elektronische Steuereinheit, zur Ansteuerung des elektromagnetischen Ventils (74) vorgesehen ist, das bei Über- oder Unterschreiten vorgebbarer Eingangssignalwerte (A, B) für vorgebbare Zeitspannen (T1, T2) Steuersignale an das elektromagnetische Ventil (74) abgibt und dieses während der Zeitspannen (T1, T2) in seine angezogene Stellung (I) bringt.

9. Steuerung nach Anspruch 8, dadurch gekennzeichnet, daß Mittel zur Erfassung des Kupplungskolbendruckes oder einer mit diesem Druck in eindeutiger Weise in Beziehung stehender Größe vorgesehen sind, deren Erfassungswert als Eingangssignal für die Steuereinrichtung (72) dient.

10. Steuerung nach Anspruch 8 oder 9, dadurch gekennzeichnet, daß ein Wegschalter (64) vorgesehen ist, der mit dem Kupplungsventil (58) zusammenwirkt und bei Über- oder Unterschreiten einer vorgebbaren Kupplungsventilstellung eine Umschaltung des Eingangssignals für die Steuereinrichtung (72) vornimmt.

FIG.1

FIG. 2

FIG. 3

FIG. 4

FIG. 5

FIG. 6

FIG. 7

FIG.8

KUPPELDRUCK / BAR

$T_1 = 15$ SEC

$T \leq 1.5$ SEC

$> 1.5$ SEC

$T_2 = 1.5$ SEC

KUEHLOEL

EIN

AUS

ZEIT/ SEC

FIG. 4

FIG. 5

FIG. 6

FIG. 8

FIG. 7

FIG. 3

FIG. 9

EP 0 519 358 A1

Europäisches Patentamt

**EUROPÄISCHER RECHERCHENBERICHT**

Nummer der Anmeldung

EP 92 10 9993

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 225 074 (KUBOTA)<br>* das ganze Dokument * <br>--- | 1,5,6 | F16D25/12 |
| A | US-A-3 351 169 (MCINDOE)<br>* das ganze Dokument * <br>--- | 5,6 | |
| A | FR-A-2 318 352 (BORG-WARNER)<br>* das ganze Dokument *<br><br>----- | 1 | |

**RECHERCHIERTE SACHGEBIETE (Int. Cl.5)**

F16D

Der vorliegende Recherchenbericht wurde für alle Patentansprüche erstellt

| Recherchenort | Abschlußdatum der Recherche | Prüfer |
|---|---|---|
| DEN HAAG | 31 AUGUST 1992 | BALDWIN D.R. |